(19) Europäisches Patentamt
European Patent Office
Office européen des brevets

(11) EP 1 881 382 A2

(12) # EUROPEAN PATENT APPLICATION

(43) Date of publication:
**23.01.2008 Bulletin 2008/04**

(51) Int Cl.:
***G05B 19/4065*** *(2006.01)* ***B25B 23/147*** *(2006.01)*

(21) Application number: **07112849.0**

(22) Date of filing: **20.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **21.07.2006 US 491453**

(71) Applicant: **Black & Decker, Inc.**
**Newark, DE 19711 (US)**

(72) Inventors:
- **Vanko, John C.**
**Timonium, MD MD 21093 (US)**
- **Forster, Michael K.**
**White Hall, MD MD 21161 (US)**

(74) Representative: **Bell, Ian Stephen et al**
**Black & Decker UK**
**210 Bath Road**
**Slough, Berkshire SL1 3YD (GB)**

(54) **Adaptive control scheme for detecting and preventing torque conditions in a power tool**

(57) A control scheme is provided for a power tool having a rotary shaft. The control scheme includes: monitoring parameters of a power tool during operation of the tool; evaluating a rotational condition of the tool about a longitudinal axis of the rotary shaft using a function defined as a linear combination of the monitored parameters; and initiating a protective operation to address the rotational condition of the tool based on an output of the function. In a simple form, the function is expressed in the form $c_0 + c_1*m_1 + c_2*m_2 + ... + c_n*m_n$, where ($c_0$, $c_1$, $c_2$ ... $c_n$) are constants and ($m_1$, $m_2$ ... $m_n$) are the monitored parameters.

FIG. 2
Monitor Tool Parameters
42
Evaluate Rotational Condition
44
Exceed Threshold ?
46
NO
YES
Initiate Protective Operation
48

EP 1 881 382 A2

## Description

The present disclosure relates generally to power tools and, more particularly, to a control system for detecting and preventing torque conditions which may cause the operator to lose control of the tool.

In order for power tools, such as drills, to be effective at quickly drilling holes or driving fasteners, the tools must be able to deliver high levels of torque. In some instances, such torque levels can be difficult for users to control. For instance, when drilling a hole with a drill, some workpieces will develop burrs on the tool exit side of the workpiece. These burrs can engage the flutes of the drill bit, thereby causing a rapid increase in torque as the drill tries to break free. In some instances, the burrs may stop drill bit rotation, thereby causing a strong reaction torque that is imparted to the tool operator as the motor turns the tool in the operator's grasp (rather than turning the drill bit). In other instances, the twist condition is a slower phenomenon in which the torque level slowly increases until the operator loses control of the tool.

Therefore, it is desirable to provide a control system for detecting torque conditions which may cause the operator to lose control of the tool and implementing protective operations upon detecting adverse rotational conditions. The control scheme should be adaptive to handle different types of rotational conditions.

The statements in this section merely provide background information related to the present disclosure and may not constitute prior art.

A control scheme is provided for a power tool having a rotary shaft. The control scheme includes: monitoring parameters of a power tool during operation of the tool; evaluating a rotational condition of the tool about a longitudinal axis of the rotary shaft using a function defined as a linear combination of the monitored parameters or as a linear combination of functions of the monitored parameters; and initiating a protective operation to address the rotational condition of the tool based on an output of the function. In a simple form, the function is expressed in the form $c_0 + c_1*m_1 + c_2*m_2 + ... + c_n*m_n$, where ($c_0$, $c_1$, $c_2$ ... $c_n$) are constants and ($m_1$, $m_2$ ... $m_n$) are the monitored parameters.

In another aspect of this disclosure, the monitored parameters are selected from the group of current drawn by the tool, angular displacement of the tool about the axis, angular velocity of the tool about the axis, and/or angular acceleration of the tool about the axis.

Further areas of applicability will become apparent from the description provided herein. It should be understood that the description and specific examples are intended for purposes of illustration only and are not intended to limit the scope of the present disclosure.

Figure 1 is a diagram of an exemplary drill;
Figure 2 is a flowchart depicting an exemplary adaptive control scheme for a power tool;
Figure 3 is a cross-plot illustrating empirically derived tool parameter data;
Figure 4 is a chart illustrating experimental results of the adaptive control scheme in the context of a hole cutting tool and derived using linear regression;
Figure 5 is a chart illustrating experimental results of the adaptive control scheme in the context of a hole cutting tool and derived using logistic regression; and
Figure 6 is a diagram of an exemplary control circuit for an AC driven power tool.

The drawings described herein are for illustration purposes only and are not intended to limit the scope of the present disclosure in any way.

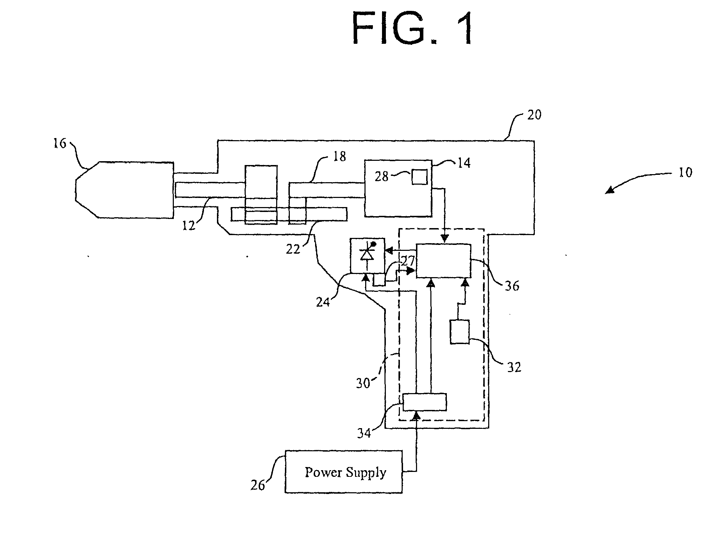

Figure 1 illustrates an exemplary power tool 10 having a rotary shaft. In this example, the power tool is a hand held drill. While the following description is provided with reference to a drill, it is readily understood that the broader aspects of this disclosure are applicable to other types of power tools having rotary shafts, such as drills, circular saws, angle grinders, screw drivers and polishers.

In general, the drill includes a spindle 12 (i.e., a rotary shaft) drivably coupled to an electric motor 14. A chuck 16 is coupled at one end of the spindle 12; whereas a drive shaft 18 of the electric motor 14 is connected via a transmission 22 to the other end of the spindle 12. These components are enclosed within a housing 20. Operation of the tool is controlled through the use an operator actuated switch 24 embedded in the handle of the tool. The switch regulates current flow from a power supply 26 to the motor 14. Although a few primary components of the drill are discussed above, it is readily understood that other components known in the art may be needed to construct an operational drill.

The power tool 10 is also configured with a control system 30 for detecting and preventing torque conditions which may cause the operator to lose control of the tool. The control system 30 may include a rotational rate sensor 32, a current sensor 34, and a microcontroller 36 embedded in the handle of the power tool 10.

Under certain operating conditions, the power tool 10 may rotate in the operator's grasp. In a drill, the rotational rate sensor 32 is configured to detect rotational motion of the tool generally about the longitudinal axis of the spindle 12. Due to the complex nature of the rotational forces, it is understood that the tool does not likely rotate precisely around the axis of the spindle. The rotational rate sensor 32 in turn communicates a signal indicative of any rotational motion to the controller 36 for further assessment. For different power tools, it is envisioned that the sensor may be disposed in a different location and/or configured to detect motion along a different axis.

In a preferred embodiment, the operating principle of the rotational rate sensor 32 is based on the Coriolis effect. Briefly, the rotational rate sensor is comprised of a resonating mass. When the power tool is subject to rotational motion about the axis of the spindle, the resonating mass will be laterally displaced in accordance with the Coriolis effect, such that the lateral displacement is directly proportional to the angular rate. It is noteworthy that the resonating motion of the mass and the lateral movement of the mass occur in a plane which is orientated perpendicular to the rotational axis of the rotary shaft. Capacitive sensing elements are then used to detect the lateral displacement and generate an applicable signal indicative of the lateral displacement. An exemplary rotational rate sensor is the ADXRS150 or ADXRS300 gyroscope device commercially available from Analog Devices. Other types of rotational sensors, such as angular speed sensors, accelerometers, etc., are also within the scope of this disclosure.

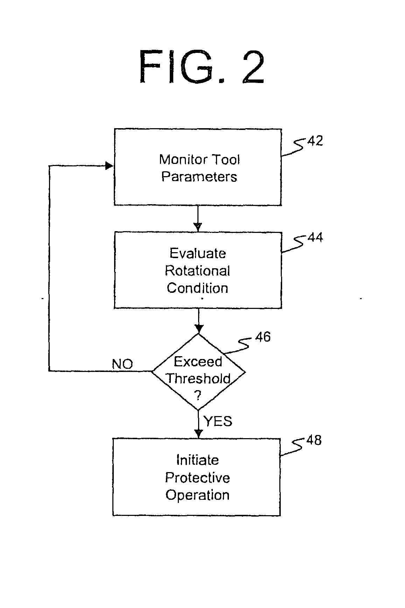

With reference to Figure 2, the microcontroller implements an adaptive control scheme for assessing the rotational motion of the tool. During operation of the tool, various parameters associated with the power tool are monitored in real time as indicated at 42. Values for these parameters are in turn provided to the controller. Exemplary parameters include angular displacement of the tool about the axis, angular velocity of the tool about the axis, angular acceleration of the tool about the axis, motor current, motor temperature, trigger switch temperature, etc. It is readily understood that other parameters are within the scope of this disclosure.

Based on the monitored parameters, the rotational condition of the tool about the longitudinal axis of the spindle is then evaluated at 44 by the microcontroller. In particular, the control scheme employs a function that is defined as a linear combination of the parameters, or functions of parameters, to assess the rotational condition. In a simple form, this function may be expressed as $f = c_0 + c_1*m_1 + c_2*m_2 + ... + c_n m_n$, where $(c_0, c_1, c_2, ..., c_n)$ are constant coefficients and $(m_1, m_2, ..., m_n)$ are the monitored parameters of the power tool. The coefficients remain constant for a given power tool and are computed in a manner further described below.

A more general expression of the function is as a linear combination of functions of the monitored parameters. This more general expression is $f = c_0 + c_1*f_1(m_1, m_2, ... m_k) + c_2*f_2(m_1, m_2, ..., m_k) + ... + c_n* f_n(m_1, m_2, ...m_k)$, where $(f_1, f_2, ..., f_n)$ are sub-functions of k monitored parameters. Exemplary functions may include but are not limited to $f_1 = m_1*m_2$, $f_2 = 1/m_3$, $f_3 = \ln(m_5)$, $f_4 = m_2*m_2*m_2$, and $f_5 = \exp\hat{}m_1$. Other types of functions are also contemplated by this disclosure. Although the simple form of the function will be used to teach the method below, it is understood that this more general form of the function is also within the scope of this disclosure.

During operation, the microcontroller periodically computes a value of the function. A protective operation intended to address a rotational condition may be initiated at 48 based on the output of the function. When the function outputs a value greater than some threshold (e.g., zero), then the controller initiates a protective operation; otherwise, no protective measures are taken.

In an exemplary embodiment, linear regression is used to determine the coefficient values of the function. In this context, linear regression is a method of estimating the conditional expected value of one variable given the values of other variables. Moreover, it provided the means to compute a set of constants such as to minimize, in a least-squares sense, the sum of the squared errors between the computed function and the expected values. In this case, the output of the function is derived from one or more selected operational parameters of the power tool.

During the development phase and prior to commercialization, the power tool is instrumented to collect the necessary parameters for the purpose of computing functional constants appropriate to the power tool or power tool family. To determine when a protective operation is needed, a given power tool is operated under different conditions which cause the tool to rotate in the operator's grasp. During such conditions, tool parameters are monitored and captured for further evaluation. In addition, for each observed rotational condition, a determination is made as to whether a protective operation is needed to address the rotational condition. Captured tool parameter data may then be tagged as either requiring a protective operation or not requiring a protective operation. As tool parameters are monitored over time, it is understood that a discrete set of data preceding or coinciding with the triggering event is tagged. It is also understood that after coefficients have been determined in the development phase, they are implemented in the production version of the power tool or family of power tools, as is appropriate.

Coefficients for the function may be derived from the collected tool data using linear regression. Briefly, a design matrix, X, is constructed from the tool data, where each column of the matrix correlates to a particular type of measurement, like angular displacement, angular velocity, etc., and each row of the matrix is a set of tagged parameter data coincident in time. It is noted that the first column will correspond to the coefficient $c_0$ and every element is set to one in this column. The desired result for each set of parameter data is used to construct a column matrix, R, where each element corresponds to the respective row of data in X. In an exemplary result matrix, 1 may be used to indicate the need for a protective operation; whereas, -1 may be used to indicate there is no need for a protective operation. A more granular assessment may be derived by assigning more than two results to the tagged tool parameter data. For example, the most severe rotational conditions may be indicated by a +1000, intermediate rotational conditions may be indicated by +100, less sever rotational conditions may be indicated by +1, and finally conditions requiring no protective operation are indicated by -1. In this example, different thresholds are used to evaluate the function and different protective operations may be initiated to address the severity of the rotational condition.

The computation proceeds as follows. The design matrix is multiplied by a transpose, $X^T$, of the design matrix. Denote the result $X^TX$. The transpose of the design matrix is also multiplied with the result matrix, R, a column matrix. Denote this result $X^TR$. An inverse of the product from the first multiplication operation, denoted $[X^TX]^{-1}$ is then multiplied times the product of the second multiplication operation, $X^TR$, thereby yielding another column matrix. The values of the elements of this resulting column matrix serve as the coefficients for the function ($c_0$, $c_1$, $c_2$, ..., $C_n$).

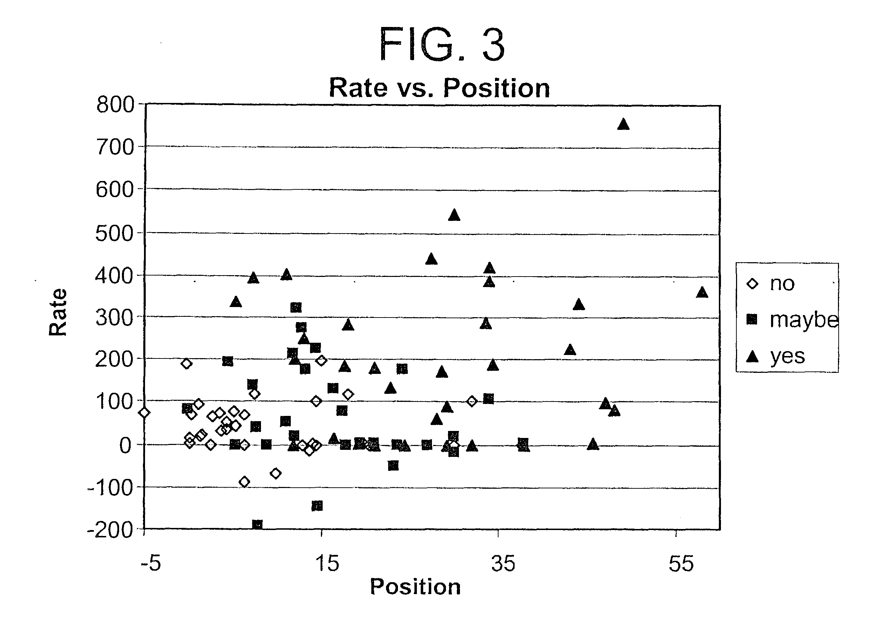

Experimental results for a hole cutting tool demonstrate the merits of this approach. During operation of the hole cutting tool, sixty-six (66) discrete sets of tool parameter data were collected. Each set of data was tagged as either requiring a protective operation, not requiring a protective operation, or possibly requiring a protective operation. Figure 3 illustrates a cross-plot of angular velocity (y-axis) in relation to angular displacement (x-axis). As shown by the wide spread and scatter of data points, these two parameters are independent of each other. Thus, no single threshold can be drawn to separate situations which require a protective operation from those instances which do not require a protective operation. It is noteworthy that cross-plots of other monitored tool parameters (e.g., angular acceleration and motor current) demonstrate similar patterns.

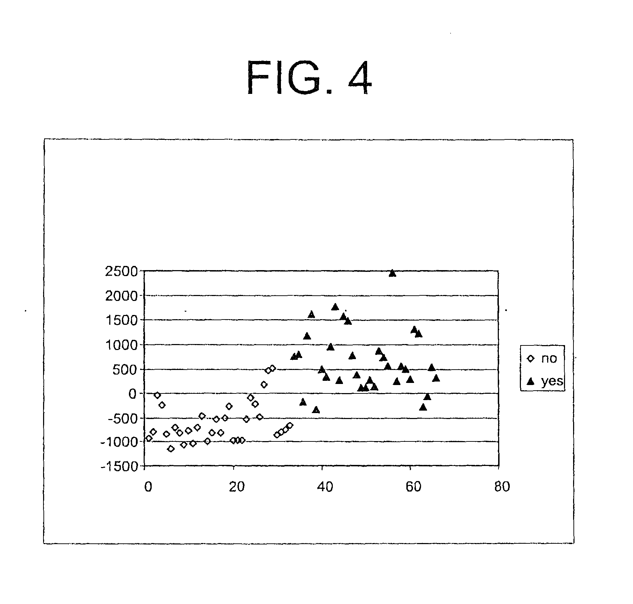

However, when linear regression was applied to the tool parameter data, coefficients for a linear combination function were derived. In a first instance, the tool parameters included angular displacement, angular velocity and angular acceleration. The derived coefficients may be scaled to be integers in order to facilitate implementing the function in a microprocessor. In this instance, the coefficients were scaled by a thousand. Even after scaling, the angular acceleration term remained negligible and thus was dropped from the function. The resulting function was found to be (42 * angular displacement) + (2 * angular velocity) - 1072. Applying this resulting function to the sixty-six sets of tool parameter data yielded the results shown in Figure 4. With zero serving as the threshold, data points greater than zero will initiate a protective operation and data points less than zero will result in no protective operation. With a few exceptions, it can be seen that this approach accurately separated the instances which require a protective operation from those instances which do not require any such action.

In another instance, the tool parameters were selected as angular displacement, angular velocity and a third parameter defined as the product of angular displacement and angular velocity. This product is exemplary of one of the sub-functions described above. Through trial and error, other parameters and/or combinations of parameters may be derived for the hole cutting tool. Likewise, these tool parameters, different tool parameters or combinations of tool parameters may be used for other types of power tools.

An alternative technique for determining the coefficient values of the function is through the use of logistic regression. Logistic regression is particularly suited to functions having binary results. Logistic regression maximizes the probability for tool data requiring a protective operation while minimizing the probability for tool data which does not require a protective operation. In this technique, the linear combination of coefficients and tool parameter data equals the natural logarithm of the ratio of the probability of yes divided by the probability of no as follows:

$$\ln(P_y/(1-P_y)) = c_0 + c_1{*}m_1 + c_2{*}m_2 + \ldots + c_n m_n,$$

where In denotes the natural logarithm, $P_y$ is the probability of yes, $1-P_y$ is the probability of no, ($c_0$, $c_1$, $c_2$, ..., $c_n$) are constant coefficients and ($m_1$, $m_2$, ..., $m_n$) are the monitored parameters of the power tool. The probability of yes may be restated as

$$P_y = 1 / (1 + 1/e\hat{}( c_0 + c_1{*}m_1 + c_2{*}m_2 + \ldots + c_n m_n)).$$

Alternatively,

$$P_y = e\hat{}( c_0 + c_1{*}m_1 + c_2{*}m_2 + \ldots + c_n m_n) / (1 + e\hat{}( c_0 + c_1{*}m_1 + c_2{*}m_2 + \ldots + c_n m_n))$$

may be easier to compute, depending on the microcontroller and algorithm employed. The probability of yes is exactly one when the expression ($c_0 + c_1{*}m_1 + c_2{*}m_2 + ... + c_n m_n$) is infinite and positive. The probability of no is exactly one when the expression ($c_0 + c_1{*}m_1 + c_2{*}m_2 + ... + c_n m_n$) is infinite and negative. When the expression ($c_0 + c_1{*}m_1 + c_2{*}m_2$

$+ ... + c_n m_n$) results in a value greater than zero, then the probability of yes is greater than 0.5 and the probability of no is less than 0.5. In this case, the controller initiates a protective operation. When the expression is less than zero then the probability of yes is less than 0.5 and the probability of no is greater than 0.5, then the controller should not initiate a protective operation. In the case where the expression is exactly zero, then the probability of yes is precisely 0.5, as is the probability of no, so the controller may initiate a protective operation, or not. It is a situation where the probability of yes equals the probability of no, and either initiation of a protective operation, or the lack of initiation of a protective operation, is equally acceptable. For convenience, let a protective operation be initiated when the probability of yes and the probability of no both equal 0.5. As can be seen in the description above, for the purpose of deciding to initiate a protective operation or not, only the expression ($c_0 + c_1 * m_1 + c_2 * m_2 + ... + c_n m_n$) need be evaluated. The full function for the probability of yes need not be evaluated. For the purpose of gradually reducing the torque applied by the power tool, full evaluation of the function for the probability of yes can be beneficial. While the above description has been provided with reference to the natural logarithm, it is contemplated that other bases of the logarithm may be employed. An exponential having a base two is particularly suitable for microprocessor computations.

Computation of the unknown coefficients may proceed as follows, beginning in a similar fashion to the procedure for linear regression described above. First, a design matrix, X, is constructed from the collected tool data, where each column of the matrix correlates to a particular type of measurement and each row of the matrix is a set of tagged parameter data coincident in time. It is again noted that the first column will correspond to the coefficient $c_0$ and every element is set to one in this column. Second, an initial guess is made for vector b, a column matrix of the desired coefficients such that each element corresponds to the respective row in X. In step three, the design matrix X is multiplied by this vector and saved for subsequent computations as $X * b_{old.}$

The algorithm then proceeds as follows:

Compute $u_i = 1/(1 + \exp(-(Xb)_i))$, where $u_i$ represents the $i^{th}$ element of the column matrix b of provisional probabilities;
Compute (yi - $u_i$), where $y_i$ represents the $i^{th}$ element of the expected outcome, a one or a zero, where one denotes the desire to initiate a protective operation and zero denotes the lack of a protective operation;
Compute a square matrix W with diagonal elements $W_{ii} = u_i(1-u_i)$, where all other elements are set to zero such that only the diagonal elements need to be computed and thus saved in a column, for instance;
Compute $W_{ii}^{-1} * (y_i-u_i)$ to yield a column matrix of i elements, where $W_{ii}^{-1} = 1/Wii$;
Computer $X^* b_{old} - W_{ii}^{-1} * (y_i-u_i)$ to yield another column matrix of i elements;
Compute W * X (which equals $W_{ii}$ times each element of i respective rows), a matrix of i rows and n+1 columns;
Transpose W * X into $X^T * W$;
Multiply $(X^T * W) * (X*b_{old} - W_{ii}^{-1} * (y_i - u_i))$, a square matrix of n+1 elements;
Multiply $(X^T *W) * X$, a square matrix of n +1 elements;
Invert $(X^T *W) * X$ and denote it as $[(X^T*W)*X]^{-1}$
Multiply $[(X^T *W) * X]^{-1} * [(X^T*W) * (X * b_{old} - W_{ii}^{-1} * (y_i-u_i))]$, a column matrix of n+1 elements which is designated as $b_{new}$.

Logistic regression is not deterministic and thus requires an iterative solution. $b_{new}$ is copied into $b_{old}$ and the algorithm continues with step three above, looping back as many times as is necessary. While more or less iterations may be feasible, empirical tests have shown that precise results are typically achieved after six iterations. Following a suitable number of iterations, the vector provides the coefficients for the linear combination, ($c_0$, $c_1$, $c_2$, ..., $c_n$).

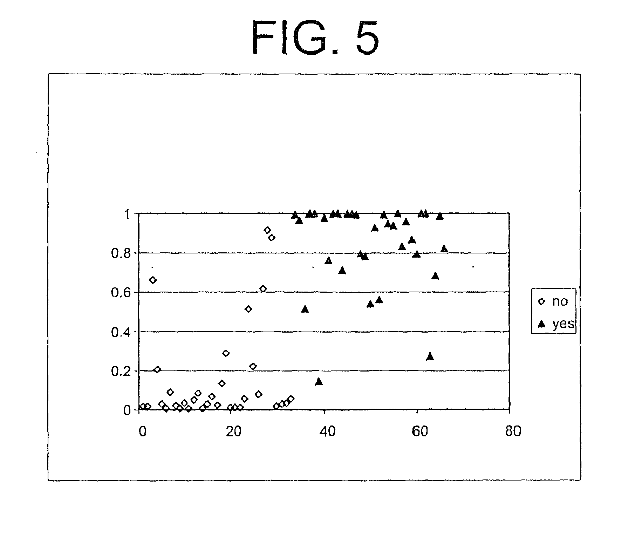

Logistic regression was applied to the sixty-six (66) discrete sets of tool parameter data which were collected for the hole cutting tool. The resulting function was found to be $P_y$ = 1 / (1+e^-((0.1876 * angular displacement) + (0.015 * angular velocity) -5.102)). Applying this resulting function to the sixty-six sets of tool parameter data yielded the results shown in Figure 5. In this instance, the logistic regression approach provided better separation amongst the test data. It is envisioned that other techniques for deriving the coefficient values are also within the broader aspects of this disclosure.

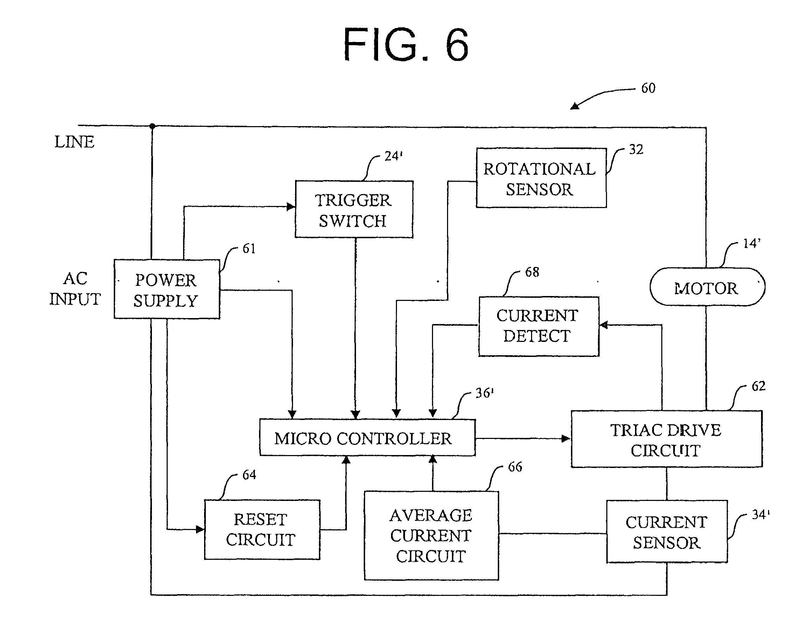

Operation of an exemplary control circuit 60 for an AC driven power tool is further described in relation to Figure 6. A power supply circuit 61 is coupled to an AC power line input and supplies DC voltage to operate the microcontroller 36'. The trigger switch 24' supplies a trigger signal to the microcontroller 36' which indicates the position or setting of the trigger switch 24' as it is manually operated by the power tool operator. Drive current for operating the motor 14' is controlled by a triac drive circuit 62. The triac drive circuit 62 is, in turn, controlled by a signal supplied by microcontroller 36'.

The microcontroller 36' is also supplied with a signal from a current detector circuit 68. The current detector circuit 68 is coupled to the triac drive circuit 62 and supplies a signal indicative of the conductive state of the triac drive circuit 62. If for some reason the triac drive circuit 62 does not turn on in response to the control signal from the microcontroller 36', this condition is detected by the current detector circuit 68.

A current sensor 34' is connected in series with the triac drive circuit 62 and the motor 14'. In an exemplary embodiment, the current sensor 34' may be a low resistance, high wattage resistor. The voltage drop across the current sensor 34' is measured as an indication of actual instantaneous motor current. The instantaneous motor current is supplied to an average current measuring circuit 66 which in turn supplies the average current value to the microcontroller 36'.

In operation, the trigger switch 24' supplies a trigger signal to the microcontroller 36' that varies in proportion to the switch setting. Based on this trigger signal, the microcontroller 36' generates a control signal which causes the triac drive circuit 62 to conduct, thereby allowing the motor 14' to draw current. Motor torque is substantially proportional to the current drawn by the motor and the current draw is controlled by the control signal sent from the microcontroller to the triac drive circuit. Accordingly, the microcontroller can control the torque imparted by the motor.

An exemplary protective operation is to reduce the torque imparted to the spindle to a non-zero value that enables an operator of the tool to regain control of the tool. In the context of the control circuit 60 described above, the controller can override the trigger signal from the trigger switch. Upon detecting a triggering rotational condition, the controller 36' sends a control signal to the triac drive circuit 62' which reduces the current draw of the motor and thus reduces the torque imparted to the spindle. For example, the torque could be reduced to 30% of its current operational amount or a predefined fixed torque level. If the operator regains control of the tool, the torque level may be reset to 100%. In this way, the operator has regained control of the tool without terminating or resetting operation of the tool.

In another aspect of this disclosure, the function used to evaluate the rotational condition of the tool is also used to determine the amount of torque reduction. Rather than setting the desired result to 1 or -1, the result matrix in the linear regression approach is set to vary between zero (i.e., no torque reduction) and a maximum torque reduction which may be less than 100%. Accordingly, the output of the function will correlate either directly or by some factor to an amount of torque reduction. Likewise, the output from a logistic regression function may also correlate to an amount of torque reduction. In either case, the output of the function is first used to determine the need for a protective operation. When a protection operation is warranted, the output of the function indicates the amount of torque reduction suitable for this rotational condition. It is understood that the desired value of the function may be a negative number for rotation occurring in the opposite direction of the tool rotation.

Alternatively, the power tool may be configured with a proportional torque transmitting device interposed between the motor and the spindle. In this example, the proportional torque transmitting device may be controlled by the microcontroller instead of the motor. The torque transmitting device may take the form of a magneto-rheologocical fluid clutch which can vary the torque output proportional to the current fed through a magnetic field generating coil. It could also take the form of a friction plate, cone clutch or wrap spring clutch which can have variable levels of slippage based on a preload holding the friction materials together and thus transmitting torque. In this case, the preload could be changed by driving a lead screw supporting the ground end of the spring through a motor, solenoid or other type of electromechanical actuator. Other types of torque transmitting devices are also contemplated by this disclosure. Likewise, other techniques for reducing the torque imparted to the spindle are also within the scope of this disclosure.

In other instances, the protective operation is intended to terminate or reset operation of the tool. Exemplary protective operations of this nature include (but are not limited to) disengaging the motor 14' from the spindle 12, braking the motor 14', braking the spindle 12, and disconnecting power to the motor 14'. Depending on the size and orientation of the tool 10, one or more of these protective operations may be initiated to prevent undesirable rotation of the tool 10.

The above description is merely exemplary in nature and is not intended to limit the present disclosure, application, or uses.

## Claims

**1.** A control scheme for a power tool having a rotary shaft, comprising:

monitoring parameters of a power tool during operation of the tool;
evaluating a rotational condition of the tool about a longitudinal axis of the rotary shaft using a function defined as a linear combination of the monitored parameters and the monitored parameters are selected from a group consisting of angular displacement of the tool about the axis and angular velocity of the tool about the axis; and
initiating a protective operation to address the rotational condition of the tool based on an output of the function.

**2.** The control scheme of Claim 1 wherein the function having a form of $c_0 + c_1*m_1 + c_2*m_2$, where $(c_0, c_1, c_2)$ are constants and $(m_1, m_2)$ are the monitored parameters.

**3.** The control scheme of Claim 2 wherein $(c_0, c_1, c_2)$ are derived using linear regression.

**4.** The control scheme of Claim 1 wherein the function having a form of $p = 1/(1 + 1/e\hat{}(c_0 + c_1*m_1 + c_2*m_2 + ... + c_n*m_n))$, where p is a probability for initiating the protective operation, $(c_0, c_1, c_2 ... c_n)$ are constants and $(m_1, m_2 ... m_n)$ are the monitored parameters.

**5.** The control scheme of Claim 4 wherein ($c_0$, $c_1$, $c_2$ ... $c_n$) are derived using logistic regression.

**6.** The control scheme of Claim 1 wherein monitoring parameters further comprises determining rotational motion of the tool about the axis using a rotational acceleration sensor disposed in a handle of the power tool.

**7.** The control scheme of Claim 1 wherein monitoring parameters further comprises measuring a rotational velocity based on a Coriolis acceleration using a rotational motion sensor.

**8.** The control scheme of Claim 1 wherein the protective operation is further defined as reducing the torque applied to the rotary shaft by an amount that correlates to the output of the function.

**9.** The control scheme of Claim 1 wherein the protective operation is further defined as one of controlling torque applied to the rotary shaft, braking the rotary shaft, pulsing a motor operably coupled to the rotary shaft, braking the motor, disengaging the motor from the rotary shaft, or removing electric power from the motor.

**10.** A control scheme for a power tool having a rotary shaft, comprising:

monitoring parameters of a power tool during operation of the tool;
evaluating a rotational condition of the tool about a longitudinal axis of the rotary shaft using a function defined as a linear combination of the monitored parameters, the function having a form of $c_0 + c_1*m_1 + c_2*m_2 + ... + c_n*m_n$, where ($c_0$, $c_1$, $c_2$ ... $c_n$) are constants and ($m_1$, $m_2$ ... $m_n$) are the monitored parameters; and
initiating a protective operation to address the rotational condition of the tool based on an output of the function.

**11.** The control scheme of Claim 10 wherein the monitored parameters are further defined as angular displacement of the tool about the axis, angular velocity of the tool about the axis, angular acceleration of the tool about the axis or combinations thereof.

**12.** The control scheme of Claim 10 wherein ($c_0$, $c_{1,}$ $c_2$ ... $c_n$) are derived using linear regression.

**13.** The control scheme of Claim 10 wherein monitoring parameters further comprises determining rotational motion of the tool about the axis using a rotational acceleration sensor disposed in a handle of the power tool.

**14.** The control scheme of Claim 10 wherein monitoring parameters further comprises measuring a rotational velocity based on a Coriolis acceleration using a rotational motion sensor.

**15.** The control scheme of Claim 10 wherein the protective operation is further defined as reducing the torque applied to the rotary shaft by an amount that correlates to the output of the function.

**16.** The control scheme of Claim 10 wherein the protective operation is further defined as one of controlling torque applied to the rotary shaft, braking the rotary shaft, pulsing a motor operably coupled to the rotary shaft, braking the motor, disengaging the motor from the rotary shaft, or reducing slip torque of a clutch disposed between the motor and the rotary shaft.

**17.** A control scheme for a power tool having a rotary shaft, comprising:

monitoring parameters of a power tool during operation of the tool;
evaluating a rotational condition of the tool about a longitudinal axis of the rotary shaft using a function defined as a linear combination of the monitored parameters, the function having a form of $f = c_0 + c_1*f_1(m_1, m_2, ... m_k) + c_2*f_2(m_1, m_2, ..., m_k) + ... + c_n* f_n(m_1, m_2, ...m_k)$, where ($c_0$, $c_1$, $c_2$ ... $c_n$) are constants and ($f_1$, $f_2$, ..., $f_n$) are sub-functions of the monitored parameters; and
initiating a protective operation to address the rotational condition of the tool based on an output of the function.

**18.** The control scheme of Claim 17 wherein the monitored parameters are further defined as angular displacement of the tool about the axis, angular velocity of the tool about the axis, angular acceleration of the tool about the axis or combinations thereof.

**19.** The control scheme of Claim 17 wherein ($c_0$, $c_1$, $c_2$... $c_n$) are derived using linear regression.

**20.** The control scheme of Claim 17 wherein monitoring parameters further comprises determining rotational motion of the tool about the axis using a rotational acceleration sensor disposed in a handle of the power tool.

**21.** The control scheme of Claim 17 wherein monitoring parameters further comprises measuring a rotational velocity based on a Coriolis acceleration using a rotational motion sensor.

**22.** The control scheme of Claim 17 wherein the protective operation is further defined as reducing the torque applied to the rotary shaft by an amount that correlates to the output of the function.

**23.** The control scheme of Claim 17 wherein the protective operation is further defined as one of controlling torque applied to the rotary shaft, braking the rotary shaft, pulsing a motor operably coupled to the rotary shaft, braking the motor, disengaging the motor from the rotary shaft, or reducing slip torque of a clutch disposed between the motor and the rotary shaft.

**24.** A control system suitable for use in a power tool, comprising:

a motor drivably coupled to a rotary shaft to impart rotary motion thereon;
a rotational rate sensor disposed within the tool and operable to detect rotational motion of the tool about a longitudinal axis of the shaft; and
a controller electrically connected to the rotational rate sensor and operable to detect a rotational condition of the tool about the longitudinal axis using a function defined as a linear combination of rotational motion parameters derived from the rotational rate sensor, the function having a form of $c_0 + c_1*m_1 + c_2*m_2 + ... + c_n*m_n,$ where $(c_{0,} c_{1,} c_2 ... c_n)$ are constants and $(m_{1,} m_2 ... m_n)$ are the rotational motion parameters.

10
20
36
32
14
28
27
18
22
24
30
34
Power Supply
26
12
16

FIG. 1

FIG. 2
42
Monitor Tool Parameters
44
Evaluate Rotational Condition
46
Exceed Threshold ?
YES
NO
48
Initiate Protective Operation

Rate vs. Position
Rate
800
700
600
500
400
300
200
100
0
-100
-200
Position
-5
15
35
55
no
maybe
yes

FIG. 3

FIG. 4

2500
2000
1500
1000
500
0
-500
-1000
-1500
0
20
40
60
80
no
yes

FIG. 5

no
yes
0
0.2
0.4
0.6
0.8
1
0
20
40
60
80

FIG. 6
60
32
ROTATIONAL SENSOR
14'
MOTOR
62
TRIAC DRIVE CIRCUIT
34'
CURRENT SENSOR
68
CURRENT DETECT
36'
MICRO CONTROLLER
66
AVERAGE CURRENT CIRCUIT
24'
TRIGGER SWITCH
64
RESET CIRCUIT
61
POWER SUPPLY
LINE
AC INPUT